Europäisches Patentamt

European Patent Office

Office européen des brevets

(11) Veröffentlichungsnummer: **0 322 542**
**A1**

## (12) EUROPÄISCHE PATENTANMELDUNG

(21) Anmeldenummer: 88118349.5

(22) Anmeldetag: 04.11.88

(51) Int. Cl.4: **H04B 7/005 , H04L 25/03**

(30) Priorität: 24.12.87 DE 3744075

(43) Veröffentlichungstag der Anmeldung:
05.07.89 Patentblatt 89/27

(84) Benannte Vertragsstaaten:
**ES GR**

(71) Anmelder: **Licentia Patent-Verwaltungs-GmbH**
**Theodor-Stern-Kai 1**
**D-6000 Frankfurt/Main 70(DE)**

(72) Erfinder: **Langewellpott, Ulrich, Dr. Ing.**
**Ulmer Strasse 26**
**D-7915 Thalfingen(DE)**

(74) Vertreter: **Schulze, Harald Rudolf, Dipl.-Ing.**
**Licentia Patent-Verwaltungs-GmbH**
**Theodor-Stern-Kai 1**
**D-6000 Frankfurt/Main 70(DE)**

(54) Verfahren zur Entzerrung von dispersiven, linearen oder näherungsweise linearen Kanälen zur Übertragung von digitalen Signalen sowie Anordnung zum Ausführen des Verfahrens.

(57) Verfahren zur Entzerrung von dispersiven, linearen oder näherungsweise linearen Kanälen zur digitalen Signalübertragung mittels eines an den Gesamt-Übertragungskanal angepaßten adaptiven Matched-Filters, das das Empfangssignal in eine zeitdiskrete Signalfolge umwandelt und dabei die optimalen Abtastzeitpunkte selbst bestimmt, und eines nachgeschalteten Entzerrers, der die Signalfolge abschnittsweise mittels eines Iterationsverfahrens mit Relaxation entzerrt.

FIG. 1

EP 0 322 542 A1

## Verfahren zur Entzerrung von dispersiven, linearen oder näherungsweise linearen Kanälen zur Übertragung von digitalen Signalen sowie Anordnung zum Ausführen des Verfahrens

Die Erfindung betrifft ein Verfahren zur Entzerrung von dispersiven, linearen oder näherungsweise linearen Kanälen zur Übertragung von digitalen Signalen gemäß dem Oberbegriff des Patentanspruchs 1 sowie eine Anordnung zum Ausführen des Verfahrens.

Verfahren bzw. Anordnungen dieser Art werden allgemein in Systemen zur Informationsübertragung über dispersive, zeitvariante Kanäle, insbesondere Funkkanäle eingesetzt, wie z.B. in digitalen Rundfunksystemen (DAB) oder in zellularen Mobilfunksystemen mit dispersiver Mehrwegeausbreitung. Ihr Zweck besteht in der empfängerseitigen Entzerrung zur Unterdrückung von Nachbarzeichenstörungen, bei den oben genannten zellularen Mobilfunksystemen unter Ausnutzung der Mehrwege-Diversity.

Bekannte Verfahren dieser Art, wie z.B. die in den Artikeln von P. Monsen "Feedback Equalization for Fading Dispersive Channels", IEEE Transactions on Information Theory, Januar 1971, S. 56 - 64, und D. Godard "Channel Equalization Using a Kalman Filter for Fast Data Transmission", IBM Journal Res. Develop., Mai 1974, S. 267 - 273, beschriebenen Verfahren setzen entscheidungs-rückgekoppelte Entzerrer (DFE) ein, denen ein an den Sender angepaßtes Matched-Filter (MF) vorgeschaltet ist.

Der Nachteil dieser Verfahren besteht vor allem darin, daß die Adaption des Empfängers für viele Anwendungen zu langsam erfolgt oder nur mit großem Aufwand zu realisieren ist.

Andere Verfahren, wie z.B. das in den Artikeln von J.G. Proakis und J.H. Miller "An Adaptive Receiver for Digital Signaling Through Channels With Intersymbol Interference", IEEE Transactions on Information Theory, Vol. IT-15, No. 4, Juli 1969, S. 484-497, beschriebene Verfahren setzen lineare Entzerrer ein. Der Nachteil dieser Verfahren besteht vor allem in ihrer mangelhaften Wirksamkeit insbesondere bei der Übertragung über rasch veränderliche Kanäle mit hoher Dispersion.

Bekannt ist auch das Viterbi-Verfahren (G.D. Forney jr. "The Viterbi Algorithm", Proceedings of the IEEE, Vol. 61, No. 4, März 1973, S. 268 - 278), das zwar nicht wie die oben genannten Verfahren auf lineare oder näherungsweise lineare Kanäle beschränkt ist, bei dem jedoch mit anwachsender Dispersionsdauer der Signalverarbeitungsaufwand exponentiell anwächst, wodurch die Wirtschaftlichkeit dieses Verfahrens im allgemeinen stark eingeschränkt ist.

Die Aufgabe der Erfindung besteht darin, ein Verfahren der eingangs genannten Art zu schaffen, das mit möglichst geringem Signalverarbeitungsaufwand auch bei langer Dispersion eine möglichst hohe Wirksamkeit und schnelle Adaption des Empfängers an den Übertragungskanal ermöglicht.

Die erfindungsgemäße Lösung der Aufgabe ist im Patentanspruch 1 beschrieben. Die übrigen Ansprüche enthalten vorteilhafte Aus- und Weiterbildungen des erfindungsgemäßen Verfahrens sowie Details von vorteilhaften Ausführungsformen einer Anordnung zum Ausführen des erfindungsgemäßen Verfahrens und bevorzugte Anwendungen der Erfindung.

Das erfindungsgemäße Verfahren zur Entzerrung von dispersiven, linearen oder näherungsweise linearen Kanälen zur Übertragung von digitalen Signalen mittels eines Matched-Filters und eines nachgeschalteten Entzerrers sieht vor, daß das Matched-Filter an den gesamten Übertragungskanal angepaßt wird und anschließend die übertragenen Empfangssignale r(t), die durch eine Datenfolge $a_k$ in Form einer Folge von Symbolen $a_i$ aus dem Alphabet des Senders charakterisiert sind, in dem Matched-Filter gefiltert werden. Als Ergebnis dieser Filterung wird am Ausgang des Matched-Filters eine zeitdiskrete Signalfolge $mfo_k$ ("Matched-Filter-Output") ausgegeben, wobei das Matched-Filter die optimalen Abtastzeitpunkte für die zeitdiskrete Signalfolge $mfo_k$ selbsttätig bestimmt. Anschließend wird diese Signalfolge $mfo_k$ komplett oder vorzugsweise abschnittsweise im nachgeschalteten Entzerrer mittels eines Iterationsverfahrens mit Relaxation entzerrt und kann anschließend zur weiteren Signalverarbeitung einem oder mehreren Entscheidungsgliedern für harte und/oder weiche Entscheidungen zugeführt werden, wobei den Entscheidungsgliedern mit weicher Entscheidung vorteilhaft jeweils eine fehlerkorrigierende Decodierungsschaltung nachgeschaltet sein kann.

Die Vorteile des Verfahrens bestehen vor allem darin, daß mit vergleichsweise geringem Signalverarbeitungsaufwand selbst bei langer Dispersion eine hohe Wirksamkeit und schnelle Adaption des Empfängers an den Übertragungskanal erreicht wird.

Das erfindungsgemäße Verfahren eignet sich allgemein für den Einsatz in Systemen zur Informationsübertragung über dispersive, zeitvariante Kanäle, insbesondere Funkkanäle. Neben dem Einsatz in digitalen Rundfunksystemen kann das erfindungsgemäße Verfahren vor allem in zellularen Mobilfunksystemen mit dispersiver Mehrwegeausbreitung, wie z.B. dem zukünftigen paneuropäischen Mobilfunksystem, vorteilhaft eingesetzt werden.

Eine vorteilhafte Ausführungsform einer Anordnung zum Ausführen des Verfahrens besteht aus einem adaptiven Matched- Filter, wie es beispielsweise aus der DE 34 03 715A1 bekannt ist, und einem nachgeschalteten (und weiter unten näher beschriebenen) erfindungsgemäßen Entzerrer.

Wegen seiner hohen Wirksamkeit und schnellen Adaption kann das erfindungsgemäße Entzerrersystem (Verfahren und Anordnung zum Ausführen des Verfahrens) insbesondere die beim zukünftigen paneuropäischen Mobilfunksystem zu erwartenden Mindestdispersionsdauern von 16 μs infolge der Mehrwegeausbreitung ohne Schwierigkeiten verarbeiten.

Seine Vorzüge kommen insbesondere bei Übertragung mit TDMA (Time Division Multiple Access) über rasch veränderliche Kanäle mit hoher Dispersion zum Tragen. Hier zählen die Merkmale schnelle Adaption und - insbesondere im Vergleich mit dem Viterbi-Verfahren - niedriger Rechenaufwand, während die Wirksamkeit letzterem in etwa gleichkommt. Wie alle Entzerrersysteme ist das neuartige Entzerrersystem streng nur auf lineare Übertragungsverfahren anwendbar. Die im paneuropäischen Mobilfunksystem eingesetzte Modulation GMSK ("Gaussian-Minimum-Shift-Keying") kann jedoch ohne spürbare Degradation als linear betrachtet werden, so daß dem Einsatz des Entzerrersystems auch dort nichts im Wege steht. Das neue Konzept ist außerdem ohne weiteres auch für mehrstufige lineare Modulation N-PSK ("N-Phase-Shift-Keying"), N-QAM ("N-Quadratur-Amplitude-Modulation") geeignet. Eine Erweiterung der Anwendung auf kontinuierliche Übertragung ist ebenfalls möglich.

Die Wirkungsweise des Entzerrersystems soll im folgenden in drei Stufen beschrieben werden, wobei die letzte Stufe gleichzeitig die größte Wirksamkeit wie auch das beste Potential für eine einfache Implementierung bietet. Der Ansatz geht von folgender Beziehung aus:

$$D = \int |r(t) - x(t)|^2 \, dt \longrightarrow \min \quad \begin{cases} \triangleq \text{ MLSE bei Gauss-} \\ \quad \text{verteilung} \\ \\ \triangleq \text{ MMSE allgemein} \end{cases} \quad (1)$$

$r(t)$: Empfangssignal

$x(t)$: Referenz, im Empfänger so nachzubilden, daß D zum Minimum wird.

Diese Beziehung entspricht, wie angedeutet, bei Gaussverteilter Störung dem Prinzip der Maximum-Likelihood-Sequence-Estimation (MLSE) und minimiert allgemein bei optimaler Auswahl der Referenz $x(t)$ den mittleren quadratischen Fehler (Minimum-Mean-Squared-Error, MMSE).

Für lineare, zeitinvariante Kanäle gilt:

$r(t) = \Sigma \, a_i \, p(t - iT) + n(t)$    (2)

mit $a_i$: Symbole aus dem Alphabet des Senders

$p$ : Kanalimpulsantwort (einschl. Filterung)

$T$ : Symboldauer

$n$ : Störung

Entsprechend läßt sich die Referenz folgendermaßen beschreiben:

$x(t) = \Sigma \, b_i \, \hat{p}(t - iT)$    (3)

mit $b_i$ : gesuchte Symbole;

$b_i = a_i$ im fehlerfreien Fall

$\hat{p}$ : Schätzung von $p$

1. Stufe

Anstelle der diskreten, ggf. komplexen Symbole $b_i$ treten kontinuierliche Größen $\beta_i$.

$\beta_i = b_i + \delta b_i$    (4)

$x_\beta = \Sigma \, \beta_i \, \hat{p}(t - iT)$    (5)

$D_\beta = \int |r(t) - x_\beta(t)|^2 \, dt$    (6)

Zur Minimierung von $D_\beta$ wird der Ausdruck bezüglich der $\beta_k$ differenziert und zu null gesetzt. Hieraus folgt:

$\Sigma \beta_i \int p(t - iT) \, \hat{p}^*(t - kT) \, dt = \int r(t) \, \hat{p}^*(t - kT) \, dt$    (7)

oder $\Sigma \beta_i \, R\hat{p}(k - i) = mfo_k$    (8)

mit $p^*$ : p konjugiert komplex

$\widehat{Rp}(m)$ : Autokorrelationsfunktion der Kanalimpulsantwort zum Zeitpunkt $m \cdot T$

$mfo_k$ : Ergebnis der Matched-Filterung (matched filter output)

Diese Beziehung stellt ein lineares Gleichungssystem zur Ermittlung der $\beta_i$ dar. Seine Bedeutung wird durch Anwendung der z-Transformation deutlich:

$$B(z) = \Sigma \, \beta_i \, z^{-i} \qquad (9)$$

$$\phi(z) = \Sigma \, \widehat{Rp}(1) \, z^{-1} \qquad (10)$$

$$MFO(z) = \Sigma \, mfo_k \, z^{-k} \qquad (11)$$

$$B(z) \bullet \phi(z) = MFO(z)$$

oder

$$B(z) = MFO(z) \bullet \phi^{-1}(z) \qquad (12)$$

Dies erinnert an den bekannten "zero-forcing"-Entzerrer, hier mit dem Eingangssignal $MFO(z)$ und der Übertragungsfunktion $\phi^{-1}(z)$. Der Unterschied zur bekannten Darstellung besteht zum einen in der Anwendung des auf den momentanen Kanal (und nicht nur auf die Filterung in Sender und Empfänger) angepaßten Matched-Filters, dessen Koeffizienten durch aktuelle Messung der Kanalimpulsantwort zu bestimmen sind; darüber hinaus wird zum anderen die Inverse $\phi^{-1}(z)$ nur indirekt durch Auflösung des linearen Gleichungssystems bestimmt.

Hierzu eignet sich ein Iterationsverfahren mit Relaxation. Bei sehr langer Symbolfolge und zeitlich langsam veränderlicher Kanalimpulsantwort bietet sich eine Aufspaltung in kürzere, einander überlappende Abschnitte an, wobei jedem neuen Abschnitt die jeweils aktuelle Kanalimpulsantwort zugrunde liegt. Zweckmäßigerweise wählt man folgende Umformulierung:

$$\Sigma \, \rho_j \, \beta_{k+j} = mfo_k^*$$

$$\rho_j = \widehat{Rp^*}(j)/\widehat{Rp}(O)$$

$$mfo_k^{\,\prime} = mfo_k/\widehat{Rp}(O). \qquad (13)$$

Damit lautet gemäß dem hier angewendeten Gauss-Seidel-Iterationsverfahren die Iterationsvorschrift im Iterationsschritt 1, Symbol k:

$$\delta\beta_k^{(1)} = mfo_k^{\,\prime} - \sum_{j<0} \rho_j \, \beta_{k+j}^{(1)} - \sum_{j\geq0} \rho_j \, \beta_{k+j}^{(1-1)} \qquad (14)$$

$$\beta_k^{(1)} = \beta_k^{(1-1)} + \alpha \, \delta\beta_k^{(1)} \qquad (15)$$

mit $\alpha$ : Relaxationsfaktor zur Steuerung der Konvergenz;

$\alpha < 1$ : Überrelaxation

$\alpha < 1$ : Unterrelaxation

$\alpha = 1$ : keine Relaxation

Beobachtung der Konvergenz:

$$s^{(1)} = \Sigma|\delta\beta_k^{(1)}|^2 \qquad (16)$$

Verringerung von $\alpha$, falls $s^{(1)} > s^{(1-1)}$ (17)

Anfangsbedingungen:

$$\beta_k^{(O)} = mfo_k^{\,\prime} \qquad (18)$$

$$s^{(O)} = \Sigma|\beta_k^{(O)}|^2 \qquad (19)$$

Abbruchbedingung :

$$s^{(1m)} \leq \epsilon \bullet s^{(O)} \qquad (20)$$

Entscheidung, falls nicht soft-decision erwünscht ist:

Abbildung von $\beta_k^{(1m)}$ auf nächstgelegenes Element des Alphabets:

$$b_k = \widehat{\beta}_k^{(1m)} \qquad (21)$$

Dieses Verfahren erlaubt eine vergleichsweise einfache Implementierung, bei der in jedem Iterationsschritt ein Entzerrungsfilter mit rückgekoppeltem Ausgang läuft, das im Aufbau einem FIR-Filter (Finite-Impulse-Response-Filter) ähnelt.

Ähnlich wie beim "zero-forcing"-Entzerrer kann in dieser Stufe eine Anhebung des Rauschens und schlechte oder keine Konvergenz auftreten, falls $\phi(z)$ nicht invertierbar ist. Eine erste Verbesserung bietet die nachfolgend beschriebene Stufe 2.

## 2. Stufe

Hier wird die Entscheidung bereits während der Iteration vorgenommen:

$$\delta\hat{\beta}_k^{(1)} = mfo_k' - \sum_{j<0} \rho_j \hat{\beta}_{k+j}^{(1)} - \sum_{j>0} \rho_j \hat{\beta}_{k+j}^{(1-1)} - \beta_k^{(1-1)} \qquad (22)$$

$$\beta_k^{(l)} = \beta_k^{(l-1)} + \alpha \delta\beta_k^{(l)} \qquad (23)$$

Ansonsten gibt es keine Abweichungen zu Stufe 1.

Ausgegeben werden:

$\hat{\beta}_k^{(lm)}$ bei hard-decision

$\beta_k^{(lm)}$ bei soft-decision.

Die Leistungsmerkmale von Stufe 2 ähneln nun denen des nichtlinear rückgekoppelten Entzerrers (DFE, Decision Feed-back Equalizer). Neben guter Konvergenz ergibt sich bei nicht allzu starken Störungen eine wirksame Rauschunterdrückung. Allerdings besteht eine Tendenz, in Fehlermuster einzurasten; es stellen sich u. U. Grenzzyklen ein wie bei amplituden- und zeitdiskreten Regelkreisen. Spürbare Verbesserung bringt Stufe 3.

## 3. Stufe

Eine harte Entscheidung (hard-decision) erfolgt entweder grundsätzlich immer (FIG. 4) oder vorzugsweise während der Iterationen nur dann, wenn ein Wert $\beta_k^{(l)}$ innerhalb eines gewissen Entscheidungsgebiets um die diskreten Alphabet-Elemente liegt. Die in den FIG. 5 und 6 gezeigten Beispiele veranschaulichen Alternativen für ein binäres Alphabet.

Mit Stufe 3 werden sowohl sehr gute Konvergenz als auch gute Entzerrung erzielt. Speziell für das GSM-System ("Groupe-Special-Mobile"-System) können in diesem Zusammenhang folgende Aussagen gemacht werden:

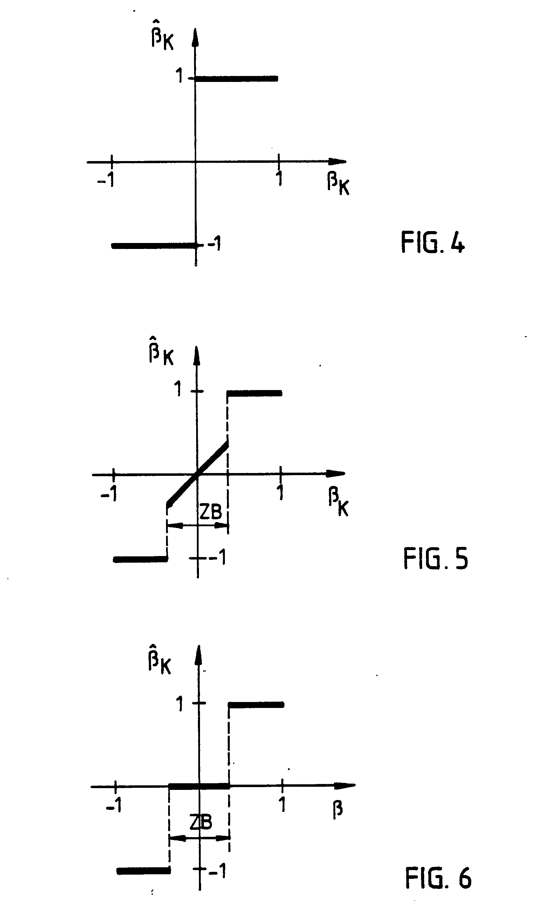

An die Demodulation schließt sich eine vorzugsweise fehlerkorrigierende Faltungsdecodierung an. Diese erfordert für optimale Wirksamkeit soft-decision des Demodulators. In diesem Fall werden i.a. nicht mehr als drei Iterationen benötigt, um eine Qualität zu erzielen, die der des Viterbi-Algorithmus zur Demodulation fast gleichkommt. Durch Verwendung von Alternative 2 (FIG. 6) kann die FIR-Filterung ("Finite-Impulse-Response"-Filterung) auf Addition/Subtraktion reduziert werden. Um die Forderung der Entzerrung von Kanälen bis zu einer Dispersion von 16 $\mu$s zu erfüllen, ist mit dem neuen Entzerrerkonzept weniger als ein Viertel des Signalverarbeitungsaufwands eines entsprechenden Viterbi-Demodulators in der Ungerböckschen Formulierung erforderlich.

Im Vergleich zum DFE ist anzumerken, daß der Adaptionsphase des DFE beim neuen Entzerrer die Iterationen zur Lösung des Gleichungssystems gegenüberstehen. Während der DFE im allgemeinen aus komplexwertigen FIR-Filtern besteht, treten komplexe Koeffizienten beim neuen Entzerrer nur in der der eigentlichen Entzerrung vorgeschalteten Matched-Filterung auf. Als wesentlichen Vorteil des neuen Entzerrers gegenüber dem DFE kann jedoch der Fortfall der Empfindlichkeit gegenüber der Wahl des Abtastzeitpunkts genannt werden. Dies wird durch die vorgezogene, auf der aktuellen Kanalvermessung beruhende und an sich bekannte adaptive Matched-Filterung erzielt, die an den gesamten Übertragungskanal angepaßt wird.

Im folgenden wird die Erfindung anhand der Figuren näher erläutert. Es zeigen:

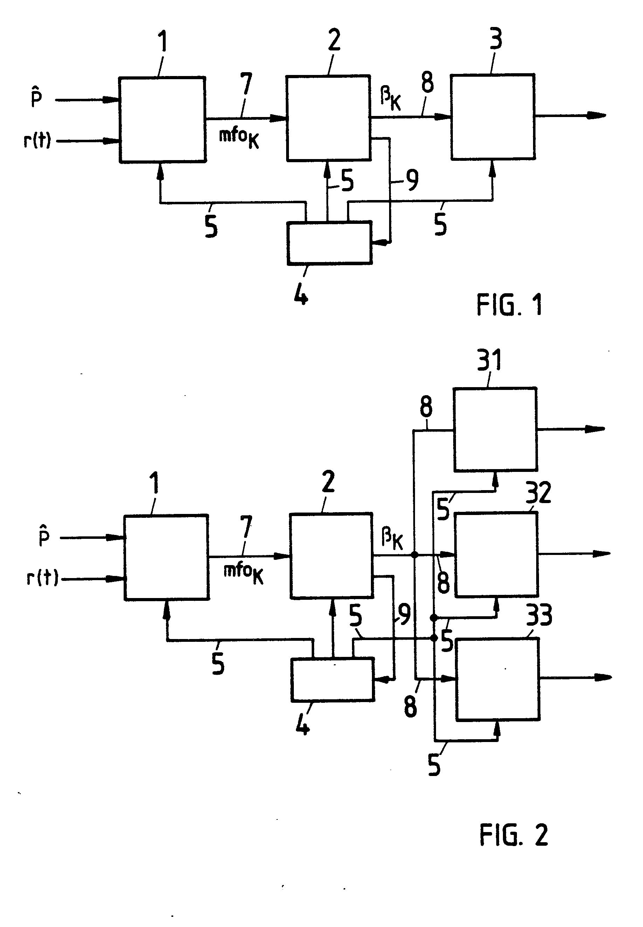

FIG. 1 das Blockschaltbild einer vorteilhaften Ausführungsform einer erfindungsgemäßen Anordnung zum Ausführen des erfindungsgemäßen Verfahrens

FIG. 2 das Blockschaltbild einer weiteren vorteilhaften Ausführungsform einer erfindungsgemäßen Anordnung zum Ausführen des erfindungsgemäßen Verfahrens

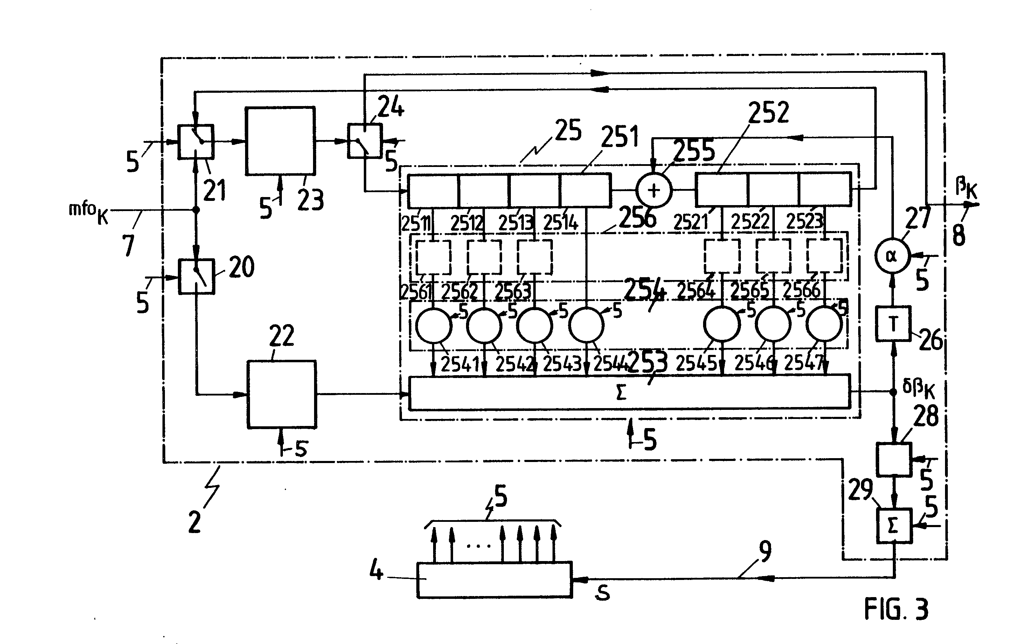

FIG. 3 das Blockschaltbild einer vorteilhaften Ausführungsform des Entzerrers der erfindungsgemäßen Anordnung zum Ausführen des erfindungsgemäßen Verfahrens

FIG. 4 eine bildliche Darstellung der Ausgangssignale eines Entscheidungsgliedes für harte Entscheidungen in Abhängigkeit von den Eingangssignalen für ein binäres Alphabet

FIG. 5-6 bildliche Darstellungen der Ausgangssignale verschiedener Entscheidungsglieder für weiche Entscheidungen in Abhängigkeit von den Eingangssignalen für ein binäres Alphabet.

Die erfindungsgemäße Anordnung zum Ausführen des erfindungsgemäßen Verfahrens in FIG. 1 besteht aus einem adaptiven Matched-Filter 1, an dem eingangsseitig zum einen die zu entzerrenden Empfangssignale $r(t)$ und zum anderen die durch eine (nicht gezeigte) andere Schaltung gewonnene Schätzung $\hat{p}$ der Kanalimpulsantwort $p$ anliegen. Das adaptive Matched-Filter 1 ist ausgangsseitig über eine Verbindungsleitung 7 mit dem Eingang eines Entzerrers 2 verbunden und liefert die aus der Filterung gewonnene zeitdiskrete Signalfolge $mfo_k$. Im Entzerrer 2 wird diese Signalfolge komplett oder abschnittsweise mittels eines Iterationsverfahrens mit Relaxation entzerrt. Die durch den Iterationsprozeß gewonnenen Schätzwerte $\beta_k$ werden am Ausgang des Entzerrers 2 ausgegeben und können in einer weiteren, über eine Verbindungsleitung 8 mit dem Ausgang des Entzerrers 2 verbundenen Schaltung 3 weiterverarbeitet werden. Eine Ablaufsteuerung 4 mit Steuerleitungen 5 überwacht den Entzerrungsprozeß. Über eine Leitung 9 erhält dabei die Ablaufsteuerung 4 von dem Entzerrer 2 die Information darüber, wann die einzelnen Iterationsprozesse im Entzerrer 2 abzubrechen sind.

Die Schaltung 3 kann dabei beispielsweise ein Entscheidungsglied 31 für harte Entscheidungen oder ein Entscheidungsglied 32 oder 33 für weiche Entscheidungen oder, wie in FIG. 2 gezeigt, eine Kombination solcher Entscheidungsglieder sein, wobei sich die Entscheidungsglieder 31, 32 und 33 in der Art ihrer Entscheidung unterscheiden, wie beispielhaft in den FIG. 4 (harte Entscheidung: eindeutige Abbildung des Eingangswertes $\beta_k$ auf das nächstgelegene Element $b_k$ des Alphabets für alle $\beta_k$), 5 (weiche Entscheidung I: keine Abbildung des Eingangswertes $\beta_k$ auf das nächstgelegene Element $b_k$ des Alphabets für Eingangswerte $\beta_k$ innerhalb eines Zwischenbereichs ZB, eindeutige Abbildung - harte Entscheidung - in den übrigen Bereichen) und 6 (weiche Entscheidung II: Zuweisung des Mittelwerts zweier benachbarter Elemente $b_k$ des Alphabets für Eingangswerte $\beta_k$ innerhalb eines Zwischenbereichs ZB, eindeutige Abbildung - harte Entscheidung - in den übrigen Bereichen) für ein binäres Alphabet gezeigt ist. Einem Entscheidungsglied 32 oder 33 für weiche Entscheidungen kann vorteilhaft noch eine fehlerkorrigierende Decodierschaltung nachgeschaltet werden.

Die vorteilhafte Ausführungsform des Entzerrers 2 der erfindungsgemäßen Anordnung zum Ausführen des erfindungsgemäßen Verfahrens in FIG. 3 enthält einen ersten Speicher 22 und einen zweiten Speicher 23.

Der erste Speicher 22 ist eingangsseitig über einen Ein-/Ausschalter 20 und die Verbindungsleitung 7 mit dem Ausgang des (nicht gezeigten) adaptiven Matched-Filters verbunden und ausgangsseitig an den Eingang eines Summationsgliedes 253 angeschlossen.

Der zweite Speicher 23 ist eingangsseitig über einen ersten Umschalter 21 entweder über die Verbindungsleitung 7 mit dem Ausgang des (nicht gezeigten) adaptiven Matched-Filters oder mit dem Ausgang eines mit einem ersten Schieberegister 251 und einem Additionsglied 255 in Reihe geschalteten zweiten Schieberegisters 252 verbunden. Ausgangsseitig ist dieser zweite Speicher 23 über einen zweiten Umschalter 24 entweder mit dem Eingang des ersten Schieberegisters 251 oder mit dem Ausgang 8 des Entzerrers 2 verbunden.

Die einzelnen Registerplätze 2511 - 2514 bzw. 2521 - 2524 des ersten bzw. zweiten Registers 251, 252 sind ausgangsseitig entweder direkt (für die 1. Stufe) oder, mit Ausnahme des Registerplatzes 2514 am Ausgang des ersten Schieberegisters 251, über Entscheidungsglieder 2561 - 2566 einer Entscheidungsstufe 256 (für die 2. oder 3. Stufe) mit einzelnen steuerbaren Gewichtungsgliedern 2541 - 2547 einer Gewichtungsstufe 254 verbunden.

Die Gewichtungsglieder 2541 - 2547 wiederum sind ausgangsseitig an die Summationsschaltung 253 angeschlossen. Die Schieberegister 251, 252, das Additionsglied 255, die Gewichtungsstufe 254, das Summationsglied 253 und ggf. die Entscheidungsstufe 256 bilden dabei zusammen ein Entzerrungsfilter 25, das im Aufbau einem FIR-Filter ähnelt.

Der Ausgang des Summationsgliedes 253 ist einerseits über eine Zeitverzögerung 26 und ein nachgeschaltetes steuerbares Gewichtungsglied 27 mit einem einstellbaren Gewichtungsfaktor $\alpha$ mit dem Additionsglied 255 des Entzerrungsfilters 25 verbunden und andererseits über eine erste Schaltung zur Betragsquadratbildung 28, eine nachgeschaltete weitere Summationsschaltung 29 über eine Verbindungslei-

6

tung 9 mit der Ablaufsteuerung 4, 5 verbunden.

Zu Beginn eines Iterationsprozesses werden die beiden Speicher 22 und 23 über die Schalter 20 und 21 mit dem Ausgang des adaptiven Matched-Filters verbunden und ein (mit anderen Abschnitten überlappender) Abschnitt der zeitdiskreten Signalfolge $mfo_k$ (oder die komplette Signalfolge, sofern sie kurz genug ist) in die beiden Speicher 22 und 23 eingelesen. Der Ausgang des zweiten Speichers 23 ist dabei über den zweiten Umschalter 24 mit dem Eingang des ersten Schieberegisters 251 verbunden.

Anschließend wird der Schalter 20 geöffnet, d.h. der Eingang des ersten Speichers 22 vom Ausgang des adaptiven Matched-Filters abgekoppelt, sowie der Eingang des zweiten Speichers 23 über den ersten Umschalter 21 mit dem Ausgang des zweiten Schieberegisters 252 verbunden.

Nacheinander werden nun im Takt der Ablaufsteuerung 4, 5 die in den Speichern 22 und 23 gespeicherten Daten in die Schieberegister 251, 252 und in das Summationsglied überführt. Die in den Schieberegisterplätzen 2511 - 2514; 2521 - 2524 befindlichen Werte werden dabei (bei der 2. oder 3. Stufe nach Durchlauf der Entscheidungsstufe 256) in der Gewichtungsstufe 254 gewichtet und die gewichteten Daten anschließend im Summationsglied 253 aufsummiert.

Die aufsummierten Daten $\delta\beta_k$ werden anschließend über die Zeitverzögerung 26 bzw. das Gewichtungsglied 27 zeitverzögert bzw. jeweils mit dem eingestellen Relaxationsfaktor $\alpha$ gewichtet über das Additionsglied 255 dem Eingang des zweiten Schieberegisters 252 zugeführt.

Gleichzeitig werden von den aufsummierten Daten $\delta\beta_k$ in der ersten Schaltung 28 die Betragsquadrate gebildet, die anschließend in der weiteren Summationsschaltung 29 aufsummiert werden. Das Summationssignal s wird über die Verbindungsleitung 9 der Ablaufsteuerung 4, 5 zugeführt und dient zum einen zur Einstellung des Relaxationsfaktors $\alpha$ und zum anderen zur Herleitung eines Kriteriums für den Abbruch des jeweils laufenden Iterationsprozesses.

In einer vorteilhaften Ausführungsform wird dabei der Iterationsprozeß abgebrochen, wenn das Summationssignal s einen bestimmten ersten Wert unterschreitet.

In einer weiteren vorteilhaften Ausführungsform wird der Relaxationsfaktor $\alpha$ für die rückgeführten aufsummierten Daten $\delta\beta_k$ im darauffolgenden Iterationszyklus nicht fest vorgegeben, sondern jeweils so eingestellt, daß er vergrößert (verkleinert) wird, wenn die Differenz der Summensignale s der beiden vorangegangenen Iterationszyklen einen bestimmten zweiten Wert unterschreitet (überschreitet), wobei vorteilhafterweise die Größe des zweiten Wertes in Abhängigkeit von der Größe des jeweiligen letzten Summationssignals s gewählt wird.

Die am Ausgang des zweiten Schieberegisters 252 erscheinenden neuen Schätzwerte $\beta_k$ werden während des Iterationsprozesses fortlaufend in den zweiten Speicher 23 eingelesen und überschreiben dabei die bisher gespeicherten Daten (nach dem ersten Iterationszyklus also die gespeicherten Daten der Signalfolge $mfo_k$ und in den darauffolgenden Iterationszyklen die in dem jeweils vorangegangenen Iterationszyklus gewonnenen Schätzwerte $\beta_k$).

Am Ende des Iterationsprozesses werden die Speicherinhalte des zweiten Speichers 23, d.h. die zuletzt gespeicherten Schätzwerte $\beta_k$, über den Umschalter 24 an den Ausgang 8 des Entzerrers 2 gegeben und von dort an die nachfolgenden signalverarbeitenden Schaltungen, wie z.B. Entscheidungsglieder und/oder fehlerkorrigierenden Decodierungsschaltungen, weitergeleitet. Anschließend wird die nächste Signalfolge $mfo_k$ bzw. der nächste Abschnitt der Signalfolge $mfo_k$ im Entzerrer 2 verarbeitet, indem die Eingänge der beiden Speicher 22 und 23 über die Schalter 20, 21 wieder mit dem Ausgang des adaptiven Matched-Filters verbunden werden und der Ausgang des zweiten Speichers 23 über den zweiten Umschalter 24 wieder mit dem Eingang des ersten Schieberegisters 251 verbunden wird und der sich dann anschließende Iterationsprozeß wie oben beschrieben wiederholt.

Es versteht sich, daß das erfindungsgemäße Verfahren bzw. die erfindungsgemäße Anordnung zum Ausführen des Verfahrens mit fachmännischem Können aus- bzw. weitergebildet bzw. an die verschiedenen Anwendungen angepaßt werden kann, ohne daß dies hier an dieser Stelle näher erläutert werden muß.

So ist es z.B. möglich, in dem Ausführungsbeispiel des Entzerrers 2 gemäß FIG. 3 anstelle der beiden beispielhaft mit vier bzw. drei Registerplätzen versehenen Schieberegister im Entzerrungsfilter des Entzerrers längere (oder kürzere) Scheiberegister zu verwenden (mit einer entsprechend größeren - oder kleineren - Anzahl von Gewichtungsgliedern in der Gewichtungsstufe und - bei der 2. oder 3. Stufe - Entscheidungsgliedern in der Entscheidungsstufe des Entzerrungsfilters).

Auch ist es möglich, anstelle der in dem Ausführungsbeispiel des Entzerrers 2 gemäß FIG. 3 beispielhaft angenommenen reellen Datenfolge $a_k$ komplexwertige Datenfolgen $a_k$ in dem Entzerrer 2 zu verarbeiten, wobei in diesem Fall das adaptive Matched-Filter bzw. im Entzerrer die beiden Speicher sowie die Schieberegister, das Additionsglied und die Gewichtungsglieder im Entzerrungsfilter komplex ausgeführt werden müssen.

Schließlich ist es denkbar, die Schätzung $\hat{p}$ der Kanalimpulsantwort p im adaptiven Matched-Filter selbst durchzuführen, so daß nur noch das Empfangssignal r(t) in das adaptive Matched-Filter eingegeben werden muß.

## Ansprüche

1. Verfahren zur Entzerrung von dispersiven, linearen oder näherungsweise linearen Kanälen, insbesondere Funkkanälen, zur Übertragung von digitalen Signalen mittels eines Matched-Filters und eines nachgeschalteten Entzerrers, dadurch gekennzeichnet,
- daß das Matched-Filter (1) an den gesamten Übertragungskanal angepaßt wird und anschließend ein durch eine Datenfolge $a_k$ charakterisiertes Empfangssignal r() in dem Matched-Filter (1) gefiltert wird;
- daß als Ergebnis der Filterung eine zeitdiskrete Signalfolge $mfo_k$ am Ausgang des Matched-Filters (1) ausgegeben wird und daß das Matched-Filter (1) dabei selbsttätig die optimalen Abtastzeitpunkte für die zeitdiskrete Signalfolge $mfo_k$ bestimmt;
- daß die zeitdiskrete Signalfolge $mfo_k$ anschließend komplett oder abschnittsweise im Entzerrer (2) mittels eines Iterationsverfahrens mit Relaxation entzerrt wird.

2. Verfahren nach Anspruch 1, dadurch gekennzeichnet,
- daß die Signalfolge $mfo_k$ in kürzere, einander überlappende Abschnitte unterteilt wird und die Abschnitte einzeln in einem ersten und zweiten Speicher (22, 23) des Entzerrers (2) gespeichert werden;
- daß anschließend die jeweils gespeicherte Signalfolge $mfo_k$ in einem Entzerrungsfilter (25) des Entzerrers (2) entzerrt wird,
indem die im zweiten Speicher (23) gespeicherten Daten dem Eingang eines mit einem zweiten Schieberegister (252) in Reihe geschalteten ersten Schieberegisters (251) zugeführt werden,
indem in jedem Takt eines Iterationszyklusses die in den einzelnen Registerplätzen (2511 - 2514; 2521 -2523) der beiden Schieberegister (251; 252) gespeicherten Daten über Gewichtungsglieder (2541 - 2547) einer Gewichtungsstufe (254) einem Summationsglied (253) zugeführt und dort aufsummiert werden und indem die aufsummierten Daten $\delta\beta_k$ am Ausgang des Summationsgliedes (253) anschließend zeitverzögert und zusätzlich gewichtet (relaxiert) zu dem Eingang des zweiten Schieberegisters (252) rückgeführt werden;
- daß im Entzerrungsfilter (25) während eines jeden Iterationszyklusses neue Schätzwerte $\beta_k$ der gesuchten Datenfolge $a_k$ erzeugt werden, die jeweils am Ausgang des zweiten Schieberegisters (252) ausgegeben und anschließend in dem zweiten Speicher (23) gespeichert werden und dabei die bisher gespeicherten Daten überschreiben;
- daß in jedem Iterationszyklus von den verarbeiteten Daten $\delta\beta_k$ am Ausgang des Summationsgliedes (253) das Betragsquadrat gebildet wird und die einzelnen Betragsquadrate aufsummiert werden und das Summensignal s den Relaxationsfaktor $\alpha$ für die rückgeführten verarbeiteten Daten $\delta\beta_k$ bestimmt und außerdem als Kriterium für den Abbruch des Iterationsprozesses dient;
- daß nach Abbruch des Iterationsprozesses die in dem zweiten Speicher (23) zuletzt abgelegten Schätzwerte $\beta_k$ der gesuchten Datenfolge $a_k$ am Ausgang (8) des Entzerrers (2) ausgegeben werden und anschließend der nächste Abschnitt der Ausgangssignalfolge $mfo_k$ des Matched-Filters (1) in die beiden Speicher (22, 23) eingespeichert wird.

3. Verfahren nach Anspruch 2, dadurch gekennzeichnet, daß die Gewichtungsfaktoren der einzelnen Gewichtungsglieder (2541 - 2547) der Gewichtungsstufe (254) dem Realteil der Autokorrelationsfunktion der Impulsantwort der Übertragungsfunktion des gesamten Übertragungskanals für den jeweiligen Abschnitt entsprechen.

4. Verfahren nach Anspruch 3, dadurch gekennzeichnet, daß die Länge eines Abschnitts so gewählt wird, daß die Kanalimpulsantwort während des Abschnitts näherungsweise als stationär angesehen werden kann.

5. Verfahren nach einem der Ansprüche 2 bis 4, dadurch gekennzeichnet, daß der Iterationsprozeß abgebrochen wird, wenn das Summensignal s einen bestimmten ersten Wert unterschreitet.

6. Verfahren nach einem der Ansprüche 2 bis 4, dadurch gekennzeichnet, daß der Relaxationsfaktor $\alpha$ für die rückgeführten verarbeiteten Daten $\delta\beta_k$ im nachfolgenden Iterationszyklus vergrößert (verkleinert) wird, wenn die Differenz der Summensignale s der beiden vorangegangenen Iterationszyklen einen bestimmten zweiten Wert unterschreitet (überschreitet).

7. Verfahren nach Anspruch 6, dadurch gekennzeichnet, daß die Größe des bestimmten zweiten Werts von der Größe des jeweiligen letzten Summensignals s abhängt.

8. Verfahren nach einem der Ansprüche 2 bis 7, dadurch gekennzeichnet, daß die nach Abbruch des Iterationsprozesses aus dem zweiten Speicher (23) ausgelesenen Schätzwerte $\beta_k$ der gesuchten Datenfolge $a_k$ einem Entscheidungsglied (31) zugeführt werden.

9. Verfahren nach einem der Ansprüche 2 bis 7, dadurch gekennzeichnet, daß die nach Abbruch des Iterationsprozesses aus dem zweiten Speicher (23) ausgelesenen Schätzwerte $\beta_k$ der gesuchten Datenfolge $a_k$ einer fehlerkorrigierenden Decodierungsschaltung (32 oder 33) zugeführt werden.

10. Verfahren nach einem der Ansprüche 2 bis 9, dadurch gekennzeichnet, daß die in den einzelnen Registerplätzen 2511 - 2514; 2521 - 2523) der beiden Schieberegister (251, 252) gespeicherten Daten über Entscheidungsglieder einer zusätzlichen Entscheidungsstufe (256) den Gewichtungsgliedern (2541 - 2547) der Gewichtungsstufe (254) zugeführt werden.

11. Verfahren nach Anspruch 9, dadurch gekennzeichnet, daß die in dem letzten Registerplatz (2514) am Ausgang des ersten Schieberegisters (251) gespeicherten Daten direkt dem zugehörigen Gewichtungsglied (2544) zugeführt werden und die in den übrigen Registern (2511 - 2513; 2521 - 2523) der beiden Schieberegister (251, 252) gespeicherten Daten über die Entscheidungsglieder (2561 - 2566) der zusätzlichen Entscheidungsstufe (256) den zugehörigen Gewichtungsgliedern (2541 - 2543; 2545 - 2547) der Gewichtungsstufe (254) zugeführt werden.

12. Verfahren nach einem der Ansprüche 10 bis 11, dadurch gekennzeichnet, daß in den Entscheidungsgliedern der Entscheidungsstufe (256) jeweils eine harte Entscheidung getroffen wird.

13. Verfahren nach einem der Ansprüche 10 bis 11, dadurch gekennzeichnet, daß in den Entscheidungsgliedern der Entscheidungsstufe (256) für Daten der Registerplätze der beiden Scheiberegister (251, 252), die innerhalb eines vorgegebenen Bereiches leigen, jeweils eine weiche Entscheidung und andernfalls eine harte Entscheidung getroffen wird.

14. Verfahren nach einem der Ansprüche 10 bis 11, dadurch gekennzeichnet, daß in den Entscheidungsgliedern der Ent scheidungsstufe (256) für Daten der Registerplätze der beiden Schieberegister (251, 252), die innerhalb eines vorgegebenen Bereiches liegen, der Mittelwert der jeweils benachbarten harten Entscheidungswerte zugewiesen und andernfalls eine harte Entscheidung getroffen wird.

15. Anordnung zum Ausführen des Verfahrens gemäß einem der Ansprüche 1 bis 14, dadurch gekennzeichnet,
- daß das Matched-Filter (1) ein adaptives Matched-Filter ist;
- daß der erste Speicher (22) des Entzerrers (2) mit seinem Eingang über einen steuerbaren Ein-/Ausschalter (20) mit dem Eingang (7) des Entzerrers (2) verbindbar ist und mit seinem Ausgang mit dem Eingang des Summationsgliedes (253) des Entzerrungsfilters (25) des Entzerrers (2) verbunden ist;
- daß der zweite Speicher (23) des Entzerrers (2) mit seinem Eingang über einen ersten steuerbaren Umschalter (21) entweder mit dem Eingang (7) des Entzerrers (2) oder mit dem Ausgang des zweiten Schieberegisters (252) des Entzerrungsfilters (25) des Entzerrers (2) verbindbar ist und mit seinem Ausgang über einen zweiten steuerbaren Umschalter (24) entweder mit dem Eingang des ersten Schieberegisters (251) des Entzerrungsfilters (25) oder mit dem Ausgang (8) des Entzerrers (2) verbindbar ist;
- daß der Ausgang des Summationsgliedes (253) des Entzerrungsfilters (25) des Entzerrers (2) über ein Zeitglied (26) und ein steuerbares Gewichtungsglied (27) mit einem zwischen die beiden Schieberegister (251, 252) des Entzerrungsfilters (25) geschalteten Additionsglied (255) verbunden ist und über eine erste Schaltung (28) zur Betragsquadratbildung und ein nachgeschaltetes zweites Summationglied (29) mit einer Ablaufsteuerung (4, 5) verbunden ist.

16. Anordnung nach Anspruch 15, dadurch gekennzeichnet, daß jeder der einzelnen Registerplätze (2511 -2514; 2521 -2523) der beiden Schieberegister (251, 252) des Entzerrungsfilters (25) des Entzerrers (2) ausgangsseitig jeweils mit dem Eingang des ihm zugeordneten Gewichtungsgliedes (2541 -2544; 2545 - 2547) der Gewichtungsstufe (254) des Entzerrungsfilters (25) verbunden sind und die Ausgänge der Gewichtungsglieder (2541 - 2547) mit dem Summationsglied (253) verbunden sind.

17. Anordnung nach Anspruch 16, dadurch gekennzeichnet, daß die Gewichtungsglieder (2541 - 2547) der Gewichtungsstufe (254) des Entzerrungsfilters (25) des Entzerrers (2) steuerbar sind.

18. Anordnung nach einem der Ansprüche 15 bis 17, dadurch gekennzeichnet, daß jeder der Registerplätze (2511 - 2514; 2521 - 2523) der beiden Schieberegister (251, 252) des Entzerrungsfilters (25) des Entzerrers (2) oder jeder der Registerplätze bis auf den am Ausgang des ersten Schieberegisters (251) gelegenen letzten Registerplatz (2514) ausgangsseitig jeweils über ein Entscheidungsglied (2561 -2563; 2564 - 2566) einer zusätzlichen Entscheidungsstufe (256) mit dem Eingang des ihm zugeordneten Gewichtungsgliedes (2541 - 2543; 2545 - 2547) der Gewichtungsstufe (254) verbunden ist.

19. Anordnung nach einem der Ansprüche 15 bis 18, dadurch gekennzeichnet, daß bei komplexwertigen Datenfolgen $a_k$ das adaptive Matched-Filter (1) sowie die Speicher (22, 23), die Schieberegister (251, 252), das Additionsglied (256) des Entzerrungsfilters (25) des Entzerrers (2) sowie die Gewichtungsglieder (2541 - 2547) der Gewichtungsstufe (254) des Entzerrungsfilters (25) komplex ausgebildet sind.

20. Entzerrungssystem nach einem der Ansprüche 1 bis 19, gekennzeichnet durch die Anwendung für ein zellulares Mobilfunksystem mit dispersiver Mehrwegeausbreitung.

21. Entzerrungssystem nach einem der Ansprüche 1 bis 19, gekennzeichnet durch die Anwendung in einem digitalen Rundfunksystem (DAB).

FIG. 1

FIG. 2

FIG. 3

EP 0 322 542 A1

FIG. 4

FIG. 5

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 246 525 (LICENTIA) <br> * Seite 10, Zeile 11 - Seite 11, letzte Zeile * <br> --- | 1 | H 04 B 7/005 <br> H 04 L 25/03 |
| A | US-A-3 775 685 (EGGIMANN et al.) <br> * Spalte 5, Zeilen 11-30 * <br> --- | 1,2 | |
| A | US-A-4 669 091 (NOSSEN) <br> * Spalte 6, Zeilen 36-44; Spalte 7, Zeile 4 - Spalte 8, Zeile 10; Spalte 10, Zeilen 54-68 * <br> --- | 1,2 | |
| A | IEE PROCEEDINGS SECTION A à I, Band 133, Nr. 3, Part F, Juni 1986, Seiten 224-231, IEEE, Stevenage, Herts, GB; R. KOHNO et al.: "Combination of cancelling intersymbol interference and decoding of error-correcting code" <br> * Seite 224, linke Spalte, letzter Abschnitt - rechte Spalte, Zeile 22 * <br> ----- | 1,9 | |

|  |  |  | RECHERCHIERTE SACHGEBIETE (Int. Cl.4) |
|---|---|---|---|
|  |  |  | H 04 B <br> H 04 L |

Der vorliegende Recherchenbericht wurde für alle Patentansprüche erstellt

| Recherchenort | Abschlußdatum der Recherche | Prüfer |
|---|---|---|
| DEN HAAG | 21-03-1989 | HOLPER G.E.E. |